# FASCICULE DE BREVET EUROPEEN

(11) **EP 2 950 170 B1**
(45) Date de publication et mention de la délivrance du brevet: **26.08.2020**
(21) Numéro de dépôt: 15163847.5
(22) Date de dépôt: 16.04.2015
(51) Int. Cl.: G05B 15/02

(54) **PROCÉDÉ DE GESTION DU FONCTIONNEMENT D'UNE INSTALLATION D'UN BÂTIMENT**
STEUERUNGSVERFAHREN ZUM BETRIEB EINER GEBÄUDEANLAGE
METHOD FOR MANAGING THE OPERATION OF A BUILDING INSTALLATION

(30) Priorité: 25.04.2014 FR 1453727
(43) Date de publication de la demande: 02.12.2015
(73) Titulaire: SOMFY ACTIVITES SA, 74300 Cluses (FR)
(72) Inventeur: Mignot, Pierre, 05380 Chateauroux-Les-Alpes (FR); Robin, Frédéric, 74300 Cluses (FR)
(74) Mandataire: Verriest, Philippe

(56) Documents cités:
- WO-A1-2014/051632
- US-B1- 8 630 741

## Description

La présente invention concerne un procédé de gestion du fonctionnement d'une installation d'un bâtiment.

Une installation d'un bâtiment comprend un certain nombre d'éléments de confort visuel ou thermique ou de sécurité. Ces éléments peuvent être des actionneurs d'un élément mobile du bâtiment comme un volet, un système d'éclairage, un appareil de chauffage ou encore un appareil aéraulique.

Ces éléments peuvent également être des points de commande desdits actionneurs permettant à un utilisateur d'envoyer un ordre de commande à un actionneur. Ces éléments peuvent également être des capteurs de présence, par exemple pour mettre le système d'éclairage en fonctionnement ou un capteur de température lié à un appareil aéraulique.

Il est connu et habituel, dans un souci de réduire au minimum la consommation énergétique des éléments de confort visuel ou thermique ou de sécurité, de mettre un certains nombre de fonctions desdits éléments en veille.

La veille correspond à un mode de fonctionnement dans lequel les fonctions d'un élément de confort visuel ou thermique ou de sécurité sont réduites par rapport à un mode de fonctionnement dit d'usage. Par exemple un appareil aéraulique continue la régulation de la température d'une pièce selon sa programmation mais ne présente plus d'affichage d'information lorsqu'il est en veille. Dans le cas d'un volet roulant motorisé piloté par radio, le « mode d'usage » correspond au mode de fonctionnement dans lequel le volet est en mouvement. Ce mode de fonctionnement comprend toutefois des périodes dans lesquelles lorsque le volet est en attente d'un ordre de commande.

L'utilité de la mise en veille est de limiter la consommation électrique, par exemple en arrêtant certaines fonctions ne pouvant être utilisées que par un individu à proximité, comme le rétro-éclairage d'un écran d'affichage dans l'exemple de l'appareil aéraulique ou en réduisant les fréquences de scrutation d'un hypothétique ordre de commande.

Certains équipements sont par ailleurs équipés d'un mode veille dit « mode veille prolongée » dans lequel la consommation énergétique est encore inférieure à celle du mode veille.

Des solutions existent pour gérer la mise en veille de fonctions d'éléments de confort visuel ou thermique ou de sécurité. Il s'agit par exemple d'arrêter certaines fonctions après une période de non utilisation prédéfinie. Il peut également s'agir d'utiliser des informations en provenance d'un capteur de présence, comme pour l'extinction d'une lumière par exemple.

Les éléments peuvent également être programmés pour que les fonctions arrêtées se remettent en marche régulièrement pour contrôler si un utilisateur a éventuellement émis une sollicitation pendant la période de veille.

Ces dispositions donnent satisfaction en ce qu'elles permettent de limiter la consommation des éléments de confort visuel ou thermique ou de sécurité.

Le document US 8,630,741 B1 décrit un procédé de gestion du fonctionnement d'une installation comprenant une pluralité d'éléments de confort, la gestion étant adaptée selon la présence d'individus.

Toutefois il apparait, notamment lors de l'utilisation de multiples éléments de confort visuel ou thermique ou de sécurité, que la durée des veilles n'est pas nécessairement en adéquation avec les comportements des utilisateurs et que les différents modes de mise en veille des éléments peuvent paraître incohérents à un utilisateur. Un autre inconvénient est que la consommation résiduelle des équipements en veille, du fait du cumul dans le temps, reste importante.

La présente invention vise à résoudre tout ou partie des inconvénients mentionnés ci-dessus.

A cet effet, la présente invention concerne un procédé de gestion du fonctionnement d'une installation comprenant une pluralité d'éléments de confort visuel ou thermique ou de sécurité du bâtiment, tels que des actionneurs d'équipements mobiles ou de systèmes aérauliques, ou tels que des points de commande, comprenant les étapes définies par la revendication 1.

Grâce à ces dispositions, il est possible de déduire de l'absence de sollicitation d'un élément de confort visuel ou thermique ou de sécurité qu'il est peu probable qu'un individu soit à proximité dudit élément. Cette information est ensuite transférée à l'élément de confort visuel ou thermique ou de sécurité en question qui peut en tenir compte.

Par exemple, dans un souci de réduction de consommation énergétique, une interface utilisateur d'un élément de confort visuel ou thermique ou de sécurité pourra être mise en veille.

Au contraire, lors de la présence d'un individu susceptible d'utiliser l'élément de confort visuel ou thermique ou de sécurité en question, l'information de probabilité de présence permettra de mettre en éveil toutes les fonctions rendant l'élément utilisable par cet individu.

L'information de probabilité de présence d'un individu susceptible d'utiliser un élément est également déterminée en fonction du contexte local. Il s'agit de savoir quel type d'information de commande et/ou de contrôle est considéré.

Si l'information de commande et/ou de contrôle correspond à une action d'un utilisateur, la probabilité de présence de l'individu susceptible de piloter un élément de confort est fonction de la localisation spatiale de cet élément et également de son éloignement par rapport à la provenance de l'information détectée.

Dans ce cas également le type d'élément de confort peut êttre déterminant. Par exemple si l'utilisateur commande l'ouverture d'un volet, la probabilité qu'il soit susceptible de le fermer juste après est faible bien que l'utilisateur soit à proximité de la commande du volet.

Inversement lorsqu'un utilisateur entre dans une pièce dont les volets sont fermés en pleine journée et allume la lumière, la probabilité qu'il sollicite la commande d'ouverture des volets est élevée.

Suite à l'ouverture d'un volet, les commandes des volets des pièces voisines seront aussi susceptibles d'être utilisées.

Il apparait donc qu'il s'agit non seulement de savoir si un utilisateur est à proximité d'un élément de confort mais également de savoir si la probabilité est élevée qu'il le sollicite prochainement.

Selon l'invention, le procédé de gestion du fonctionnement de l'installation comprend une étape d'adaptation du fonctionnement d'au moins un élément de confort visuel ou thermique ou de sécurité, l'adaptation du fonctionnement dudit au moins un élément consistant, à réception d'une information de probabilité de présence ou d'un ordre de commande déterminé en fonction de ladite information de probabilité de présence, à sélectionner un premier mode de fonctionnement dans lequel ledit au moins un élément est apte à être utilisé par un individu ou un second mode de fonctionnement dans lequel ledit au moins un élément nécessite une consommation d'énergie inférieure par rapport au premier mode de fonctionnement.

Lorsque l'élément de confort visuel ou thermique ou de sécurité est averti que la probabilité de présence d'un individu susceptible de le solliciter est faible, il peut passer du premier mode de fonctionnement au deuxième mode de fonctionnement.

Cette disposition permet notamment de réduire la consommation énergétique de l'élément de confort intérieur en question. S'il s'agit par exemple d'un écran d'interface pour le pilotage d'un système de chauffage qui passe en mode de veille lorsque personne n'est à proximité de l'écran.

Selon un aspect de l'invention, selon le second mode de fonctionnement, aucune mise à jour du contenu dudit au moins un élément de confort visuel ou thermique ou de sécurité n'est requis par ledit au moins un élément. En d'autres termes, la fréquence de demande de mise à jour sera choisie largement inférieure à la fréquence dans le premier mode de fonctionnement.

Dans d'autres cas, pour des afficheurs plus classiques, on pourra également couper l'éclairage de l'écran ou éteindre l'écran.

Lorsque L'installation comprend une entité centrale agencée pour communiquer avec les autres éléments de confort visuel ou thermique ou de sécurité de l'installation, il apparait que l'information de probabilité de présence peut être gérée depuis cette entité centrale.

Dans ce cas, l'entité centrale peut être agencée pour définir les informations de probabilité de présence relative aux différents éléments de confort visuel ou thermique ou de sécurité du bâtiment.

Selon un aspect de l'invention, l'information de probabilité de présence est connue ou communiquée à un élément de confort visuel ou thermique ou de sécurité et ce dernier détermine en fonction de l'information de probabilité de présence reçue, s'il fonctionne selon le premier ou selon le second mode de fonctionnement.

Selon cette disposition, lorsqu'un élément de confort visuel ou thermique ou de sécurité comprenant une interface utilisateur fonctionne selon le second mode de fonctionnement, la fréquence de requête de mise à jour d'un contenu d'affichage de l'interface utilisateur dudit élément est inférieure à la fréquence de requête de mise à jour dans le premier mode de fonctionnement.

Ainsi même si un contenu d'affichage ou une mise à jour du contenu d'affichage est envoyée depuis l'entité centrale ou tout autre élément externe à l'installation, l'élément de confort visuel ou thermique ou de sécurité est agencé pour ne pas poursuivre la mise à jour de l'affichage.

Ici également le but est de réduire la consommation énergétique de l'élément de confort visuel ou thermique ou de sécurité au maximum lors d'un fonctionnement selon le second mode de réalisation.

Un élément de confort visuel ou thermique ou de sécurité peut avoir un fonctionnement indépendant par rapport aux autres éléments de l'installation. Toutefois, la connaissance des données en provenance d'un élément de l'installation peut avoir une influence sur l'information de probabilité de présence sur un autre élément de l'installation.

Selon un aspect de l'invention, on associe à chaque information de commande et/ou de contrôle, une indication de présence ou d'absence. Cette indication est relative à la présence ou à l'absence d'un utilisateur à proximité d'un élément de confort visuel ou thermique ou de sécurité. Cette indication peut être obtenue par exemple si une information correspond à un ordre de commande émis par un utilisateur au niveau de l'élément de confort visuel ou thermique ou de sécurité. Cette indication peut également être obtenue si un utilisateur est détecté comme présent dans une zone du bâtiment par un capteur de présence. Dans ce cas, on obtient une indication de présence d'un utilisateur dans la zone du bâtiment concernée.

Au moins une information de commande et/ou de contrôle pour au moins un élément de confort visuel ou thermique ou de sécurité peut être interprétée pour déterminer des informations de présence ou d'absence dans une zone du bâtiment ou à l'extérieur du bâtiment d'un utilisateur.

Selon un aspect de l'invention, on dispose d'une pluralité de données en provenance de la pluralité d'éléments de confort visuel ou thermique ou de sécurité et, lors de l'étape d'établissement d'informations de probabilité de présence, on interprète les données collectées conjointement pour en déduire, pour chaque élément de confort visuel ou thermique ou de sécurité, au moins une information de probabilité de présence.

Selon un aspect de l'invention, lors de l'étape d'établissement d'informations de probabilité de présence, on déduit l'information de probabilité de présence relative audit élément de confort visuel ou thermique ou de sécurité en prenant en compte au moins une information relative à la localisation d'un élément de confort visuel ou thermique ou de sécurité, un ordre de commande provenant dudit élément.

En se positionnant au niveau de l'installation, on centralise des données en provenance de divers éléments de confort visuel ou thermique ou de sécurité. Il apparait ainsi que la comparaison des données relatives à la commande et/ou au contrôle de ces éléments de confort visuel ou thermique ou de sécurité permet une meilleure détermination de l'information de probabilité de présence.

Selon un aspect de l'invention, on distingue une information de commande et/ou de contrôle relative à au moins un élément de confort visuel ou thermique ou de sécurité correspondant à une commande et/ou un contrôle effectué par un utilisateur ou à une commande et/ou un contrôle résultant d'une programmation de l'installation.

On peut considérer par exemple que si l'information de commande et/ou de contrôle provient d'un certain type de capteur (par exemple vent, soleil, pluie), alors on va considérer qu'il s'agit d'un ordre automatique.

Cette disposition permet notamment de distinguer les ordres manuels des ordres automatiques. Dans la pratique, l'information de commande et/ou de contrôle peut également elle-même contenir une indication de la nature manuelle ou automatique de l'ordre. Alternativement, il peut être nécessaire de corréler un ensemble d'ordres de commande ou d'information pour pouvoir déterminer si un ordre reçu par un élément de confort visuel ou thermique ou de sécurité comme un actionneur est de type manuel ou automatique.

La distinction de la nature manuelle ou automatique d'un ordre de commande ou de contrôle permet de fiabiliser l'information de probabilité de présence. Il est en effet vraisemblable qu'un ordre de commande manuel traduit une présence d'un individu, même temporaire, à proximité de l'installation. A contrario, un ordre de commande automatique, ou un ordre de commande émis à distance et relayé par des connexions réseau, par exemple par Internet, peut être émis hors la présence d'un individu dans le bâtiment.

Selon une variante, l'information de probabilité de présence est liée à une information de localisation. En particulier, le lieu d'origine d'un ordre de commande peut fournir une indication de localisation d'un individu dans une zone d'un bâtiment. A partir de cette information, il est donc possible de rendre plus précise l'information de probabilité de présence qui va être associée à un élément de confort visuel ou thermique ou de sécurité.

Selon un aspect de l'invention, durant l'étape d'établissement d'une information de probabilité de présence, on prend également en compte l'heure ou un schéma de fonctionnement des éléments de confort visuel ou thermique ou de sécurité préétabli.

Le procédé prend en compte non seulement les ordres de commande d'un utilisateur au niveau d'un élément de confort visuel ou thermique ou de sécurité, mais aussi les circonstances générales qui peuvent être définies par l'heure ou un scénario ou schéma de fonctionnement programmé.

En effet pour déterminer la probabilité de présence il est important de savoir si on est en plein milieu de la nuit ou à l'heure d'un repas par exemple à midi. De même si l'utilisateur a lancé un scénario de pilotage global des éléments de confort visuel ou thermique ou de sécurité du type « je pars en vacances - fermer tous les volets », il est peu probable qu'un individu soit susceptible d'utiliser un élément du bâtiment.

Selon un aspect de l'invention, l'étape d'établissement d'information de probabilité de présence consiste pour chaque élément de confort visuel ou thermique ou de sécurité du bâtiment à établir une information de probabilité de présence sous la forme d'un pourcentage compris en un seuil bas et un seuil haut.

De préférence, on établit plusieurs niveaux de probabilité de présence d'un utilisateur susceptible de solliciter un élément de confort visuel ou thermique ou de sécurité. Les niveaux sont notamment définis par des pourcentages (par exemple 0-25%, 25-50%, 50-75%, 75-100%).

Ainsi, il apparait que l'information de probabilité de présence ne correspond pas à une valeur précise mais à une catégorie du type « sollicitation d'un élément fortement improbable », « sollicitation peu probable », « sollicitation probable » ou « sollicitation fortement probable ».

Ainsi si une information permet de déterminer que personne n'est susceptible d'utiliser un élément de confort visuel ou thermique ou de sécurité dans une pièce, par exemple si les volets de cette pièce sont fermés et qu'aucune lumière n'est allumée, on établit pour chaque élément de la pièce que la sollicitation des éléments sera fortement improbable.

Ceci permet une gestion simple des différents éléments de confort visuel ou thermique ou de sécurité, utilisable de manière immédiate et qui peut être facilement affinée au cours du temps.

Selon un aspect de l'invention, on dispose d'au moins une information de commande relative à au moins un élément de confort visuel ou thermique ou de sécurité correspondant à un scénario de pilotage des éléments de confort visuel ou thermique ou de sécurité de l'installation.

Selon un aspect de l'invention, on dispose d'au moins une information de contrôle correspondant à une information d'un capteur de présence d'un élément de confort visuel ou thermique ou de sécurité de l'installation, d'une information de l'état d'une alarme de l'installation ou d'une information relative à l'inactivité d'un élément de confort visuel ou thermique ou de sécurité pendant une période de temps définie.

Il apparait qu'une information de commande correspond à une interaction d'un utilisateur avec un élément de confort visuel ou thermique ou de sécurité et que l'information de contrôle correspond à tout type d'information pouvant être liée à la présence ou à l'absence d'individu à proximité de l'élément de confort visuel ou thermique ou de sécurité dans le bâtiment.

En ce sens, l'alarme de l'installation du bâtiment est une information importante. En effet, elle est en générale activée lorsqu'il n'y a personne dans le bâtiment.

De même des informations en provenance d'élément de confort visuel ou thermique ou de sécurité tels que des lampes et des appareils de chauffage donnent une bonne indication sur la présence ou l'absence de personne dans le bâtiment.

L'invention sera bien comprise à l'aide de la description qui suit en référence aux dessins schématiques annexés représentant, à titre d'exemple non limitatif, une forme d'exécution de ce procédé.

Il est également à noter que dans le présent texte, l'expression « information de probabilité de présence d'un individu susceptible d'utiliser un élément » équivaut à une information de probabilité de sollicitation dudit élément.
Figure 1 est une vue schématique d'un bâtiment comprenant un système de commande et/ou de contrôle.
Figure 2 est un ordinogramme représentant les étapes d'un procédé de gestion du fonctionnement d'une installation d'un bâtiment.

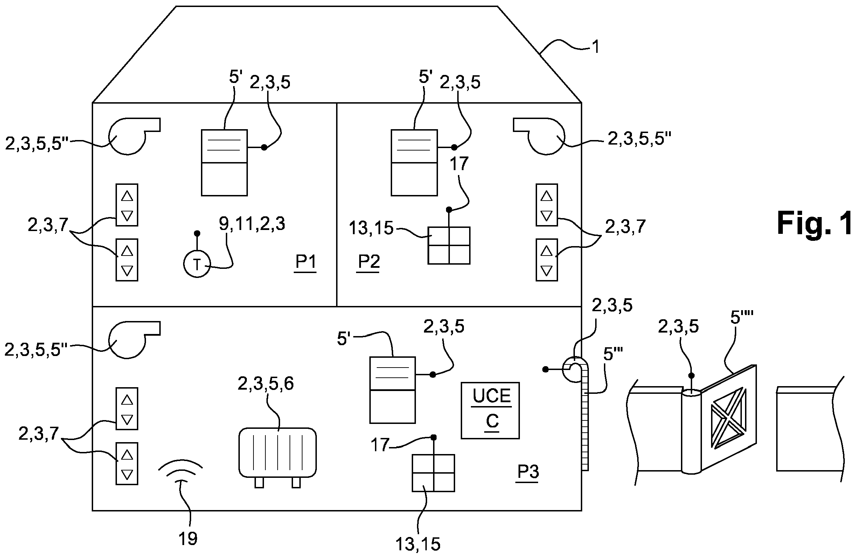

Comme illustré à la figure 1, un bâtiment 1 comprend plusieurs zones ou pièces P1, P2, P3 à l'intérieur et à l'extérieur du bâtiment et une installation 2 de commande et/ou de contrôle d'une pluralité d'élément de confort visuel ou thermique ou de sécurité 3 du bâtiment 1.

Les éléments de confort visuel ou thermique ou de sécurité 3 de l'installation 2 sont, dans le mode de réalisation présenté des actionneurs 5, des points de commande 7 desdits actionneurs 5 ou des capteurs 9.

Dans le présent texte, le terme actionneur 5 se réfère à un dispositif permettant d'agir sur un équipement d'un bâtiment, tel qu'un volet, un chauffage, un luminaire, un appareil de climatisation pour modifier son état, de manière électrique et/ou mécanique. L'actionneur comprend un récepteur de commande lui permettant de recevoir un ordre de commande automatique ou manuel, par exemple, issu d'un capteur ou d'une commande utilisateur.

Selon un exemple, un actionneur peut comprendre un moteur électrique agencé pour l'ouverture et la fermeture d'un équipement mobile 5' du bâtiment tel qu'un volet ou une fenêtre, l'ordre de commande correspondant à une position d'utilisation dudit volet ou de ladite fenêtre. Selon un autre exemple, un actionneur 5 peut comprendre un appareil aéraulique 5". De manière analogue, un actionneur peut comprendre un moteur électrique, un vérin pneumatique ou hydraulique, une résistance chauffante ou chauffage 6, une lampe ou un électroaimant. Selon d'autres exemples, un actionneur peut comprendre un moteur de porte de garage 5'" ou encore un moteur de portail 5"".

Chaque point de commande 7 est agencé pour émettre à destination d'au moins un actionneur 5 un ordre de commande suite à une action utilisateur sur le point de commande ou suite à la détection d'un passage d'un seuil prédéterminé d'une grandeur physique mesurée par le point de commande. Un ordre de commande correspond à une consigne de fonctionnement dudit actionneur 5. L'actionneur associé au point de commande d'où provient l'ordre de commande et réceptionnant cet ordre de commande réagit en modifiant son état ou sa position d'utilisation.

Il apparait ainsi qu'un actionneur 5 et un point de commande 7 associés sont aptes à fonctionner indépendamment des autres actionneurs 5 et éventuellement de l'installation 2.

Dans le présent texte, le terme capteur 9 se réfère à un dispositif de mesure d'une grandeur physique, par exemple une grandeur relative à un paramètre physique environnant, comme un capteur de température 11.

L'installation 2 comprend également une entité centrale C agencée pour échanger des données avec les éléments de confort visuel ou thermique ou de sécurité 3 selon un protocole de communication sans fil. Dans le mode de réalisation présenté le protocole utilisé est un protocole de communication par ondes radio.

L'entité centrale C comprend une unité de traitement UCE agencée pour recueillir et traiter les données en provenance des éléments de confort visuel ou thermique ou de sécurité 3. Les données recueillies correspondent à des mesures de valeurs physiques, en provenance des capteurs 9, d'ordre de commande d'actionneur 5 en provenance des points de commande 7. Il peut également s'agir d'informations de retour, en provenance d'actionneurs 5 suite à un ordre de commande, lesdites informations de retour signalant l'état ou la position de fonctionnement de l'actionneur 5. Il peut également s'agir d'un ordre de commande d'un utilisateur saisi au niveau d'un point de commande ou directement au niveau de l'entité centrale C, l'ordre de commande consistant par exemple à fermer un volet.

L'unité de traitement UCE est agencée pour, en fonction des données dont elle dispose, élaborer des ordres de commande à destination des éléments de confort visuel ou thermique ou de sécurité 3. Ainsi, bien que chaque point de commande 7 est apte à fonctionner indépendamment, l'entité centrale C agit comme un système de commande et de contrôle global dans le but d'assurer une cohérence à l'ensemble des ordres de commande du bâtiment. Cette cohérence peut être assurée en proposant à l'utilisateur différents scénarii de pilotage des éléments de confort visuel ou thermique ou de sécurité, un scénario pouvant être « je quitte la maison » ou «je ferme les volets à la tombée de la nuit ».

L'installation 2 comprend parmi les éléments de confort visuel ou thermique ou de sécurité des dispositifs de commande et/ou de contrôle 13. Chaque dispositif de commande et/ou de contrôle 13 est agencé pour afficher sur une interface utilisateur 15 des informations relatives à l'installation 2 et également pour transmettre des requêtes à destination de l'entité centrale C saisies par l'intermédiaire de l'interface utilisateur 15.

Enfin l'installation comprend une alarme 19 agencé pour détecter une effraction dans le bâtiment lorsqu'elle est enclenchée. L'alarme 19 est agencée pour être mise en marche par l'utilisateur quittant le bâtiment pour une période de temps, par exemple des vacances. L'alarme 19 est en outre agencée pour communiquer selon le protocole de communication sans fil à l'entité centrale C des données sur son état de fonctionnement, comme c'est le cas pour d'autres éléments de confort visuel ou thermique ou de sécurité de l'installation.

Il va de soi que dans le présent texte, les termes « individu », « personne » ou « utilisateur » sont équivalents et peuvent être indifféremment utilisés.

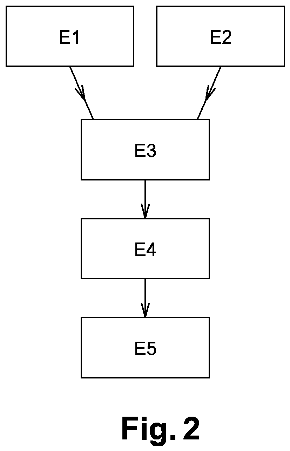

Comme illustré à la figure 2 un procédé de gestion du fonctionnement de l'installation comprend les étapes décrit ci-après. Il convient dans un premier temps de disposer au cours d'une étape E1, pour chaque élément de confort visuel ou thermique ou de sécurité 3 d'une information relative à une localisation spatiale dudit élément 3 dans le bâtiment 1.

Cette localisation spatiale est réalisée en lien avec la place occupé par un élément de confort visuel ou thermique ou de sécurité 3 dans le bâtiment 1. Par exemple, on dispose d'une information relative à la localisation spatiale du capteur de température 11 dans la pièce P1.

Il va de soi que pour des pièces de grande taille l'information relative à la localisation spatiale peut également faire référence à une partie de la pièce.

Ces informations relatives aux localisations spatiales peuvent être des informations transmises selon le protocole de communication sans fil par les éléments de confort visuel ou thermique ou de sécurité et peuvent être saisies manuellement par une interface de l'entité centrale C. Les informations relatives aux localisations spatiales peuvent notamment être issues d'une configuration des éléments de l'installation, au cours de laquelle certains éléments sont associés ou appairés, en particulier des points de commande avec des actionneurs : la localisation spatiale de l'actionneur peut par la suite être utilisée pour définir la localisation du point de commande qui lui est appairé. Dans le mode de réalisation présenté, on regroupe les informations relatives aux localisations spatiales au niveau de l'unité de traitement UCE de l'entité centrale C.

Le procédé de gestion du fonctionnement de l'installation comprend une seconde étape E2 pouvant être réalisée indépendamment de la première étape décrite ci-avant. La seconde étape E2 consiste à disposer d'informations de commande et/ou de contrôle relatives à des éléments de confort visuel ou thermique ou de sécurité 3.

Dans le mode de réalisation présenté, les informations de commande correspondent par exemple à un ordre de commande de changement d'état d'un actionneur 5.

Une information de commande peut correspondre à un scénario de pilotage des éléments de confort visuel ou thermique ou de sécurité de l'installation. Un exemple de scénario de pilotage peut être «je pars en vacances ». Dans ce cas, l'entité centrale C est agencée pour piloter les éléments de confort visuel ou thermique ou de sécurité du bâtiment pour modifier l'état des éléments de confort visuel ou thermique ou de sécurité. Une autre information de commande correspond à la mise en marche de l'alarme 19 du bâtiment. Ces informations signalent notamment une absence à venir.

Dans le mode réalisation présenté, les informations de contrôle signalant une présence correspondent par exemple à une information d'un capteur de présence 17 signalant la présence d'un individu dans une zone associée à celle du capteur. Il peut s'agir d'une information de l'état d'une alarme de l'installation, si par exemple elle est désactivée. Il peut s'agir également d'un contrôle manuel d'un équipement, par exemple l'envoi d'un ordre d'ouverture d'un volet motorisé par un interrupteur mural ou une télécommande.

Une information de contrôle signalant une absence peut être une information relative à l'inactivité d'une commande pendant une période de temps définie, par exemple si aucune modification du niveau d'éclairage dans une pièce n'a été effectuée pendant les dernières heures.

Toutes ces informations de commande et/ou de contrôle sont regroupées au niveau de l'unité de traitement UCE de l'entité centrale C. L'unité de traitement UCE est également apte à distinguer si ces informations proviennent d'une action d'un utilisateur, comme l'envoi d'un ordre de commande par utilisation d'une télécommande du bâtiment, sont des informations mesurées, comme la température dans la pièce P1 et/ou sont des informations programmées, comme un scénario de pilotage de certains éléments 3 du bâtiment 1.

Cette seconde étape peut être précédée par une collecte des données en provenance des éléments de confort visuel ou thermique ou de sécurité. On dispose ainsi d'une cartographie du bâtiment 1 contenant les commandes et/ou contrôles en cours dans le bâtiment 1.

Une troisième étape E3, réalisée suite à la première étape E1 et à la deuxième étape E2, consiste à établir à partir des informations relatives à la localisation spatiale et des informations de commande et/ou de contrôle, une information de probabilité de présence d'un individu susceptible d'utiliser un élément de confort visuel ou thermique ou de sécurité 3.

Cette information de probabilité de présence est déterminée par l'unité de traitement UCE de l'entité centrale C. Une information de probabilité de présence peut ainsi être déterminée pour chaque élément de confort visuel ou thermique ou de sécurité 3 du bâtiment 1 ou du moins à chaque zone l'installation.

Lors de cette étape on peut également associer une indication de présence ou d'absence d'un utilisateur à proximité d'un élément de confort visuel ou thermique ou de sécurité.

En effet, une information de commande et/ou de contrôle peut correspondre à un ordre de commande émis par un utilisateur directement au niveau d'un élément de confort visuel ou thermique ou de sécurité.

Dans ce cas, cette indication est utilisée lors de la détermination de la probabilité de présence. Inversement, lorsqu'un ordre de commande correspond à une programmation d'un élément de confort visuel ou thermique ou de sécurité, on sait qu'il est peu probable qu'un utilisateur soit à proximité dudit élément de confort visuel ou thermique ou de sécurité.

De préférence, on peut établir plusieurs niveaux de probabilité de présence. L'information de probabilité de présence est ainsi définie par un pourcentage entre un seuil bas et un seuil haut : par exemple 0-25%, 25-50%, 50-75%, 75-100%.

Ainsi, il apparait que l'information de probabilité de présence ne correspond pas à une valeur précise mais à une catégorie du type « sollicitation d'un élément fortement improbable », « sollicitation peu probable », « sollicitation probable » ou « sollicitation fortement probable ».

Il apparait donc que la probabilité de sollicitation est liée à la probabilité de présence physique d'un utilisateur mais également au contexte local. Un utilisateur venant d'utiliser la commande d'un volet le soir pour le fermer est certes à proximité de la commande volet, mais il est peu probable qu'il en demande l'ouverture juste après la fermeture.

Il est donc nécessaire de distinguer la probabilité de présence physique d'un individu à proximité d'un élément 3 et la probabilité de présence d'un individu susceptible d'utiliser un élément 3 qui équivaut à une probabilité de sollicitation dudit élément 3.

Ainsi si une information permet de déterminer que personne n'est susceptible d'utiliser un élément de confort visuel ou thermique ou de sécurité 3 dans une pièce P1, P2 ou P3, par exemple si les volets de cette pièce sont fermés et qu'aucune lumière n'est allumée, l'entité centrale C déduit que la sollicitation des éléments 3 de la pièce est fortement improbable.

L'unité de traitement UCE de l'entité centrale C prend également en compte l'heure lorsqu'il établit une information de probabilité de présence. En effet, la probabilité de sollicitation est forcément faible pendant la nuit.

L'unité de traitement UCE prend également en compte un scénario ou schéma de fonctionnement des éléments de confort visuel ou thermique ou de sécurité 3 préétabli. Ainsi si une commande de type « j'augmente le chauffage » est lancée durant la journée, l'entité centrale C en déduit que la probabilité de présence est plutôt élevée dans certaines pièces comme le salon.

Une quatrième étape E4 réalisée à la suite de la troisième étape E3 consiste à transmettre l'information de probabilité de présence établie à au moins un élément de confort visuel ou thermique ou de sécurité 3 concerné ou aux différents éléments d'une même zone spatiale. Dans le mode de réalisation présenté, cette étape est réalisée par l'entité centrale C. L'information est transmise selon le protocole de communication sans fil.

Une cinquième étape E5 consécutive à la quatrième étape E4 consiste à adapter le fonctionnement d'un ou de plusieurs éléments de confort visuel ou thermique ou de sécurité 3.

L'adaptation est réalisée par l'élément de confort visuel ou thermique ou de sécurité 3 à la réception d'une information de probabilité de présence. Ainsi, dans le mode de réalisation présenté chaque élément de confort visuel ou thermique ou de sécurité 3 est apte à recevoir l'information de probabilité de présence et à la traiter pour élaborer l'adaptation nécessaire.

L'adaptation consiste à sélectionner un premier mode de fonctionnement dans lequel ledit au moins un élément est apte à être utilisé par un individu ou un second mode de fonctionnement dans lequel ledit au moins un élément nécessite une consommation d'énergie inférieure par rapport au premier mode de fonctionnement.

Le premier mode de fonctionnement correspond au mode de fonctionnement normal ou « mode d'usage » : toutes les fonctions de l'élément de confort visuel ou thermique ou de sécurité susceptibles d'être utilisées par l'utilisateur sont disponibles.

Le second mode de fonctionnement correspond à un mode de fonctionnement nécessitant moins de ressources, c'est-à-dire nécessitant moins de consommation d'énergie.

Ce mode correspond à un mode de veille ou de veille prolongée. Dans le mode de réalisation présenté, il peut s'agir de mettre en veille une interface d'un point de commande. D'autres fonctions des éléments de confort visuel ou thermique ou de sécurité peuvent être maintenues comme par exemple le fonctionnement du chauffage. Dans ce mode de veille prolongées, certaines fonctions des éléments en sont pas disponibles immédiatement. Un temps d'attente perceptible par l'utilisateur doit alors être observé avant que l'élément réagisse à une éventuelle commande non prévue. Divers modes de fonctionnements pourront être prévus, correspondant chacun à une plage de valeurs de probabilité de présence.

Les interfaces utilisateur 15 de type afficheurs peuvent être agencées pour élaborer et transmettre régulièrement des requêtes à destination de l'entité centrale C comprenant une demande de mise à jour de l'affichage. Autrement dit l'afficheur demande à l'entité centrale C des mises à jour de contenu à afficher. Cet envoi de mise à jour est réalisé selon les besoins. Ainsi lors du passage au second mode de fonctionnement la fréquence des requêtes émises par l'afficheur diminue. Dans un autre mode de fonctionnement, aucune requête n'est plus émise par l'afficheur. Sa consommation globale devient donc nulle ou sensiblement nulle.

Le second mode de fonctionnement peut également consister pour un élément de confort visuel ou thermique ou de sécurité à espacer ses périodes d'éveil régulier ayant pour but de vérifier si l'appareil si un signal comme une commande utilisateur est reconnue.

La fréquence de rafraîchissement dans le premier mode de fonctionnement correspond par exemple à un intervalle de rafraîchissement l'ordre de plusieurs minutes, en particulier de 10 min. En particulier, ces rafraîchissements périodiques sont réalisés uniquement sur requête, pour éviter d'avoir à scruter en permanence l'arrivée d'un message. Un autre mode de fonctionnement correspond notamment à un mode de fonctionnement de démarrage ou de configuration. Il peut être prévu une deuxième fréquence de rafraichissement plus importante afin de permettre une réponse plus rapide de l'affichage lors de la prise en main de l'afficheur par l'utilisateur ou lors de la programmation de l'afficheur, par exemple via une autre interface utilisateur, notamment associée à l'entité centrale C. A titre d'exemple, la seconde fréquence de rafraîchissement peut correspondre à un intervalle de rafraichissement inférieur à 1 s et notamment de l'ordre de quelques centaines de ms, Le second mode de fonctionnement de démarrage ou de configuration peut être initialisé à l'initiative de l'entité centrale C, par exemple en fournissant une information de probabilité de présence très élevée, par exemple 200%. Cette information de probabilité de présence correspondrait ainsi non pas nécessairement à une présence physique, mais à un besoin de maintenir l'afficheur en communication avec l'entité centrale C. Le passage du mode de fonctionnement de démarrage ou de configuration vers le premier mode de fonctionnement dit normal peut être déclenché par exemple à la fin d'une durée prédéterminée.

Selon un exemple la modulation du temps de sommeil est aussi dépendante de l'heure : les périodes d'éveil réguliers sont plus espacées durant la nuit.

Les avantages du procédé décrit ci-avant sont multiples. On réduit au maximum la consommation énergétique en passant les éléments non sollicités en second mode de fonctionnement.

L'utilisateur n'est cependant nullement gêné dans son utilisation : le passage du second mode de fonctionnement au premier mode de fonctionnement est totalement transparent pour lui.

Ainsi l'agrément d'utilisation de l'installation est optimal : lorsque l'utilisateur a besoin ou veut utiliser un élément de confort visuel ou thermique ou de sécurité, ce dernier est prêt à l'emploi. Ceci évite à l'utilisateur que l'appareil se mette en fonctionnement pour qu'il l'utilise.

Comme il va de soi, l'invention ne se limite pas à la seule forme d'exécution de ce procédé, décrit ci-dessus à titre d'exemple, elle en embrasse au contraire toutes les variantes de réalisation.

## Revendications

1. Procédé de gestion du fonctionnement d'une installation (2) comprenant une pluralité d'éléments de confort visuel ou thermique ou de sécurité (3), tels que des actionneurs (5) d'équipements mobiles (5') ou de systèmes aérauliques d'un bâtiment, ou tels que des points de commande (7), comprenant les étapes consistant à :
- (E1) disposer, pour au moins une partie des éléments de confort visuel ou thermique ou de sécurité (3) de l'installation (2), d'au moins une information relative à une localisation spatiale desdits éléments de confort visuel ou thermique ou de sécurité (3) dans le bâtiment (1),
- (E2) disposer d'au moins une information de commande et/ou de contrôle relative à au moins un élément de confort visuel ou thermique ou de sécurité (3), telle qu'un ordre de commande de changement d'état d'un actionneur (5),
- (E3) établir, pour au moins un élément de confort visuel ou thermique ou de sécurité (3) de l'installation (2), à partir de l'au moins une information relative à la localisation spatiale et de l'au moins une information de commande et/ou de contrôle, une information de probabilité de sollicitation dudit élément de confort visuel ou thermique ou de sécurité (3) par un utilisateur,
- (E4) transmettre l'information de probabilité de sollicitation établie ou un ordre de commande déterminé en fonction de ladite information de probabilité de sollicitation audit au moins un élément de confort visuel ou thermique ou de sécurité (3),
- (E5) adapter le fonctionnement dudit au moins un élément de confort visuel ou thermique ou de sécurité (3), l'adaptation du fonctionnement dudit au moins un élément (3) consistant, à réception de l' information de probabilité de sollicitation ou de l' ordre de commande déterminé en fonction de ladite information de probabilité de sollicitation, à sélectionner un premier mode de fonctionnement dans lequel ledit au moins un élément (3) est apte à être utilisé par un individu ou un second mode de fonctionnement dans lequel ledit au moins un élément (3) nécessite une consommation d'énergie inférieure par rapport au premier mode de fonctionnement.

2. Procédé de gestion du fonctionnement de l'installation selon la revendication 1, dans lequel on associe à chaque information de commande et/ou de contrôle, une indication de présence ou d'absence.

3. Procédé de gestion du fonctionnement de l'installation selon l'une des revendications précédentes, dans lequel on dispose d'une pluralité de données en provenance de la pluralité d'éléments de confort visuel ou thermique ou de sécurité (3) et, lors de l'étape d'établissement d'informations de probabilité de sollicitation (E3), on interprète les données collectées conjointement pour en déduire, pour chaque élément de confort visuel ou thermique ou de sécurité (3), au moins une information de probabilité de sollicitation.

4. Procédé de gestion du fonctionnement de l'installation selon la revendication précédente, dans lequel, lors de l'étape d'établissement d'informations de probabilité de sollicitation (E3), on déduit l'information de probabilité de sollicitation relative audit élément de confort visuel ou thermique ou de sécurité (3) en prenant en compte au moins une information relative à la localisation d'un élément de confort visuel ou thermique ou de sécurité (3), un ordre de commande provenant dudit élément (3).

5. Procédé de gestion du fonctionnement de l'installation selon l'une des revendications précédentes dans lequel on distingue une information de commande et/ou de contrôle relative à au moins un élément de confort visuel ou thermique ou de sécurité (3) correspondant à une commande et/ou un contrôle effectué par un utilisateur ou à une commande et/ou un contrôle résultant d'une programmation de l'installation.

6. Procédé de gestion du fonctionnement de l'installation selon l'une des revendications précédentes, dans lequel durant l'étape d'établissement d'une information de probabilité de sollicitation (E3), on prend également en compte l'heure ou un schéma de fonctionnement des éléments de confort visuel ou thermique ou de sécurité (3) préétabli.

7. Procédé de gestion du fonctionnement de l'installation selon l'une des revendications précédentes, dans lequel l'étape d'établissement d'information de probabilité de sollicitation (E3) consiste pour chaque élément de confort visuel ou thermique ou de sécurité (3) du bâtiment (1) à établir une information de probabilité de sollicitation sous le forme d'un pourcentage compris en un seuil bas et un seuil haut.

8. Procédé de gestion du fonctionnement de l'installation selon l'une des revendications précédentes, dans lequel on dispose (E2) d'au moins une information de commande relative à au moins un élément de confort visuel ou thermique ou de sécurité (3) correspondant à un scénario de pilotage des éléments de confort visuel ou thermique ou de sécurité (3) de l'installation (2).

9. Procédé de gestion du fonctionnement de l'installation (2) selon l'une des revendications précédentes, dans lequel on dispose (E2) d'au moins une information de contrôle correspondant à une information d'un capteur de présence (17), d'une information de l'état d'une alarme (19) de l'installation (2) ou d'une information relative à l'inactivité d'un élément de confort visuel ou thermique ou de sécurité (3) pendant une période de temps définie.

## Patentansprüche

1. Steuerungsverfahren für den Betrieb einer Anlage (2), eine Vielzahl von Elementen für visuellen oder thermischen Komfort oder Sicherheit (3), wie Aktoren (5) für mobile Geräte (5') oder lufttechnische Systeme eines Gebäudes, oder wie Schaltpunkte (7) umfassend, die Schritte umfassend, bestehend aus:
- (E1) Verfügen, für mindestens einen Teil der Elemente für visuellen oder thermischen Komfort oder Sicherheit (3) der Anlage (2), über mindestens eine Information in Bezug auf eine räumliche Lage der Elemente für visuellen oder thermischen Komfort oder Sicherheit (3) in dem Gebäude (1),
- (E2) Verfügen über mindestens eine Schalt- und/oder Kontrollinformation in Bezug auf mindestens ein Element für visuellen oder thermischen Komfort oder Sicherheit (3), wie einen Schaltbefehl zur Statusänderung eines Aktors (5),
- (E3) Ermitteln, für mindestens ein Element für visuellen oder thermischen Komfort oder Sicherheit (3) der Anlage (2), aus der mindestens einen Information in Bezug auf die räumliche Lage und der mindestens einen Schalt- und/oder Kontrollinformation einer Information über die Wahrscheinlichkeit einer Beanspruchung des Elements für visuellen oder thermischen Komfort oder Sicherheit (3) durch einen Nutzer,
- (E4) Übertragen der ermittelten Information über die Wahrscheinlichkeit einer Beanspruchung oder eines in Abhängigkeit von der Information über die Wahrscheinlichkeit einer Beanspruchung bestimmten Schaltbefehls an mindestens ein Element für visuellen oder thermischen Komfort oder Sicherheit (3),
- (E5) Anpassen des Betriebs des mindestens einen Elements für visuellen oder thermischen Komfort oder Sicherheit (3), wobei das Anpassen des Betriebs des mindestens einen Elements (3) darin besteht, bei Empfang der Information über die Wahrscheinlichkeit einer Beanspruchung oder des in Abhängigkeit von der Information über die Wahrscheinlichkeit einer Beanspruchung bestimmten Schaltbefehls, einen ersten Betriebsmodus, bei dem das mindestens eine Element (3) imstande ist, durch ein Individuum verwendet zu werden, oder einen zweiten Betriebsmodus, bei dem das mindestens eine Element (3) einen in Bezug auf den ersten Betriebsmodus geringeren Energieverbrauch beansprucht, auszuwählen.

2. Steuerungsverfahren für den Betrieb der Anlage nach Anspruch 1, wobei jeder Schalt- und/oder Kontrollinformation ein Hinweis über Anwesenheit oder Abwesenheit zugewiesen wird.

3. Steuerungsverfahren für den Betrieb der Anlage nach einem der vorstehenden Ansprüche, wobei über eine Vielzahl von Daten aus der Vielzahl von Elementen für visuellen oder thermischen Komfort oder Sicherheit (3) verfügt wird, und beim Schritt des Ermittelns von Informationen über die Wahrscheinlichkeit einer Beanspruchung (E3) die gemeinsam gesammelten Daten interpretiert werden, um daraus für jedes Element für visuellen oder thermischen Komfort oder Sicherheit (3) mindestens eine Information über die Wahrscheinlichkeit einer Beanspruchung abzuleiten.

4. Steuerungsverfahren für den Betrieb der Anlage nach dem vorstehenden Anspruch, wobei beim Schritt des Ermittelns von Informationen über die Wahrscheinlichkeit einer Beanspruchung (E3) die Information über die Wahrscheinlichkeit einer Beanspruchung in Bezug auf das Element für visuellen oder thermischen Komfort oder Sicherheit (3) abgeleitet wird, indem mindestens eine Information in Bezug auf die Lage eines Elements für visuellen oder thermischen Komfort oder Sicherheit (3), ein Schaltbefehl von dem Element (3) berücksichtigt wird.

5. Steuerungsverfahren für den Betrieb der Anlage nach einem der vorstehenden Ansprüche, wobei eine Schalt- und/oder Kontrollinformation in Bezug auf mindestens ein Element für visuellen oder thermischen Komfort oder Sicherheit (3), die einer Schaltung und/oder Kontrolle entspricht, die von einem Nutzer durchgeführt wird, oder einer Schaltung und/oder Kontrolle entspricht, die aus einer Programmierung der Anlage resultiert, unterschieden wird.

6. Steuerungsverfahren für den Betrieb der Anlage nach einem der vorstehenden Ansprüche, wobei während des Schrittes des Ermittelns von Informationen über die Wahrscheinlichkeit einer Beanspruchung (E3) auch die Uhrzeit oder ein zuvor ermitteltes Betriebsschema der Elemente für visuellen oder thermischen Komfort oder Sicherheit (3) berücksichtigt wird.

7. Steuerungsverfahren für den Betrieb der Anlage nach einem der vorstehenden Ansprüche, wobei der Schritt des Ermittelns von Informationen über die Wahrscheinlichkeit einer Beanspruchung (E3) für jedes Element für visuellen oder thermischen Komfort oder Sicherheit (3) des Gebäudes (1) darin besteht, eine Information über die Wahrscheinlichkeit einer Beanspruchung in Form eines Prozentsatzes zu ermitteln, der in einer unteren Schwelle und einer oberen Schwelle enthalten ist.

8. Steuerungsverfahren für den Betrieb der Anlage nach einem der vorstehenden Ansprüche, wobei über mindestens eine Schaltinformation in Bezug auf mindestens ein Element für visuellen oder thermischen Komfort oder Sicherheit (3) verfügt wird (E2), die einem Szenario zur Ansteuerung der Elemente für visuellen oder thermischen Komfort oder Sicherheit (3) der Anlage (2) entspricht.

9. Steuerungsverfahren für den Betrieb der Anlage (2) nach einem der vorstehenden Ansprüche, wobei über mindestens eine Kontrollinformation entsprechend einer Information eines Anwesenheitssensors (17), eine Information über den Status eines Alarms (19) der Anlage (2) oder eine Information in Bezug auf die Untätigkeit eines Elements für visuellen oder thermischen Komfort oder Sicherheit (3) während eines definierten Zeitraums verfügt wird (E2).

## Claims

1. A method for managing the operation of an installation (2) comprising a plurality of visual or thermal comfort or security elements (3), such as actuators (5) of movable equipment or of aeraulic systems of a building, or such as control points (7), comprising the steps consisting in:
- (E1) providing, at least for part of the visual or thermal comfort or security elements (3) of the installation (2), at least one information relating to a spatial location of said visual or thermal comfort or security elements (3) within the building (1),
- (E2) providing at least one control and/or monitoring information relating to at least one visual or thermal comfort or security element (3), such that a control order for changing the state of an actuator (5),
- (E3) establishing, for at least one visual or thermal comfort or security element (3) of the installation (2), from the at least one information relating to the spatial location and from the at least one control and/or monitoring information, an information on the probability of demand of said visual or thermal comfort or security element (3) by a user,
- (E4) transmitting the established demand probability information or a control order determined according to said demand probability information to said at least one visual or thermal comfort or security element (3),
- (E5) adapting the operation of said at least one visual or thermal comfort or security element (3), the adaptation of the operation of said at least one element (3) consisting, on reception of the demand probability information or of the control order determined according to said demand probability information, in selecting a first operating mode in which said at least one element (3) is adapted to be used by an individual or a second operating mode in which said at least one element (3) requires a lower energy consumption in comparison with the first operating mode.

2. The installation operation management method according to claim 1, wherein an indication of presence or absence is associated to each control and/or monitoring information.

3. The installation operation management method according to any of the preceding claims, wherein a plurality of data originating from the plurality of visual or thermal comfort or security elements (3) is provided and, during the step of establishing demand probability information (E3), the collected data are jointly interpreted to deduce, for each visual or thermal comfort or security element (3), at least one demand probability information.

4. The installation operation management method according to the preceding claim, wherein, during the step of establishing demand probability information (E3), the demand probability information relating to said visual or thermal comfort or security element (3) is deduced while taking into account at least one information relating to the location of a visual or thermal comfort or security element (3), a control order originating from said element (3).

5. The installation operation management method according to any of the preceding claims, wherein a control and/or monitoring information relating to at least one visual or thermal comfort or security element (3) corresponding to a control and/or monitoring performed by a user or to a control and/or monitoring resulting from a programming of the installation is distinguished.

6. The installation operation management method according to any of the preceding claims, wherein during the step of establishing a demand probability information (E3), the time or a pre-established operation scheme of the visual or thermal comfort or security elements (3) is also taken into account.

7. The installation operation management method according to any of the preceding claims, wherein the step of establishing a demand probability information (E3) consists, for each visual or thermal comfort or security element (3) of the building (1), in establishing a demand probability information in the form of a percentage comprised between a low threshold and a high threshold.

8. The installation operation management method according to any of the preceding claims, wherein at least one control information relating to at least one visual or thermal comfort or security element (3) corresponding to a piloting scenario of the visual or thermal comfort or security elements (3) of the installation (2) is provided.

9. The installation (2) operation management method according to any of the preceding claims, wherein at least one monitoring information corresponding to an information of a presence sensor (17), an information on the state of an alarm (19) of the installation (2) or an information relating to the inactivity of a visual or thermal comfort or security element (3) for a defined period of time is provided.
